(19) Europäisches Patentamt
European Patent Office
Office européen des brevets

(11) EP 4 012 527 A1

(12) EUROPEAN PATENT APPLICATION

(43) Date of publication:
15.06.2022 Bulletin 2022/24

(21) Application number: 21213662.6

(22) Date of filing: 10.12.2021

(51) International Patent Classification (IPC):
G05B 23/02 (2006.01)

(52) Cooperative Patent Classification (CPC):
G05B 23/0221; G05B 2219/42133;
G05B 2219/50197

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.12.2020 BE 202005905

(71) Applicant: Laborelec CVBA
1630 Linkebeek (BE)

(72) Inventors:
• Grégoire, Sébastien
1630 Linkebeek (BE)
• Jaspar, Xavier
1630 Linkebeek (BE)
• Haut, Bertrand
1630 Linkebeek (BE)
• André, Hugo
42334 Roanne (FR)
• Touzet, Jimmy
42334 Roanne (FR)

(74) Representative: Arnold & Siedsma
Bezuidenhoutseweg 57
2594 AC The Hague (NL)

(54) METHOD FOR DETERMINING AN ESTIMATE OF A SHAFT'S ANGULAR POSITION AND MEASUREMENT ARRANGEMENT THEREFORE

(57) The invention provides a solution for determining a rotating shaft's angular position in the absence of hardware marks on such shaft.

Figure 7

**Description**

**Technical field**

The invention relates to identifying the angular position of a shaft without the presence of a so-called phase reference signal, e.g. using a reference notch or marker to determine the phase angle or angular position in vibration measurements.

**Background of the invention**

Vibration monitoring is an important aspect to consider when using rotating machines. The first vibration measurement that comes in mind is the vibration amplitude. This is indeed intuitive and it can be used to set-up alarm levels to protect an installation. Nevertheless, the amplitude is only the top of the iceberg and other aspects needs to be monitored if you want to understand the cause of the vibrations. The shaft angle, i.e. angular position of the rotating shaft needs to be monitored if one wants to understand the cause of the vibrations.

On large rotating machinery, it is a common practice to manufacture a notch on the shaft and install a sensor that will detect the passage of this notch every rotation. This is used as a reference to determine the phase angle of vibrations measurements and is called phase reference signal (in the art/literature often referred to as keyphasor).

Unfortunately, not all rotating machines have such instrumentation and it is sometimes required to install a temporary phase reference with a reflective tape and an optical sensor for example. This nevertheless requires to stop the machine and to have access to the rotor surface, bringing along additional costs and being problematic for machines that need to run continuously or for small equipment. Without phase measurement, the diagnostic capabilities of a vibration analysis are very much reduced and some operations like balancing are almost impossible. Also, some vibration changes can occur primarily in phase and mechanical problems can be undetected for a long time before further damage occurs and causes the vibration amplitude to increase.

When conducting experiments on rotating objects, like rotating shaft, is it fruitful to be able to compare different experiments in that they relate to the same starting position in terms of angular position of said object or shaft. When necessary hardware marks are provided on such rotating object or shafts, this can easily be achieved. However, as mentioned, such hardware marks are not always available, are difficult to be added or actually preferred not to be present at all.

It would therefore be very useful to be able to reconstruct the angular position of a shaft without installing a phase reference, and thus in the absence of a reference notch or hardware marks on the rotating shaft's surface.

JP 2020 159820 is an example of the state-of-the-art requiring hardware marks on the rotating shaft's surface in that distances between blades, used a predetermined reference and requires a threshold to detect the passing of a blade and requires a priori knowledge of the number of blades. US 2020/0328702 provides determining angular information but requires the presence of a signal derived from the electromotive force and uses in essence the zero passing of this signal but again relative to a predetermined reference.

US98840935 B2 is again an example of the state of the art requiring blades and further relies on waveform anomaly detection.

EP 1405047 A1 relates to vibration analysis only and does not provide angular position information, moreover there is the requirement of the cited algorithm of the existence of a reference point on the shaft.

**Aim of the invention**

The aim of the invention is to provide a solution for determining a shaft's angular position in the absence of hardware marks on such shaft by using the existing instrumentation only.

**Summary of the invention**

In a first aspect of the invention a method is provided for determining an estimate of the angular position of a shaft, while rotating, relative to a reference position of the shaft. The angular position of the shaft is further also referred to as shaft angle. This determination is based on the use of measurements, being obtained while the shaft being rotated. According to an embodiment, these measurements used, are part of vibration measurements. According to a preferred embodiment, the estimate is used to calculate the phase angles or angular positions of one or more of the vibration signals within those vibration measurements. Moreover, the measurements can be provided by sensors, for example contactless sensors, and preferably eddy current sensors. According to an embodiment, the estimate of the shaft angle is based on an algorithm performing signal processing operations on the (displacement) signal returned by the eddy current sensor. Most of the time the eddy current sensor is used to monitor a displacement, but here in this case the sensor may also be used without any displacement (herewith referring to a perfect cylinder). The signal may also be impacted by material composition variation. Such displacement signal is also referred to as so-called runout, wherein such runout being a measure for shaft irregularities excluding the effect due to the dynamic motion of the shaft, such shaft irregularities being the mechanical deviation from perfectly rounded and/or localized differences in magnetic properties within the shaft material.

Further referring to the first aspect, the invention can be realized in various ways. One can elect to first load the two datasets; and thereafter determine the related signature therefrom. However one may also elect to load a data set and first derivate the signature (and for instance delete the data set then to save memory space). The measurement campaigns for obtaining the dataset are also not necessarily performed consecutively in time, moreover, one may first load the data set and/or determine the data set related to the angular position, before one loading the data set and/or determining the data related to the reference position. This may for instance be required when data is lost and/or the reference position needs to be changed.

The method comprises of three steps. In a first step (i) at least two measurement datasets are loaded, these measurement datasets being for example temporal datasets. A first measurement dataset is obtained by starting rotating said shaft at said reference position and a second measurement dataset is obtained by starting at said angular position, being unknown, and thus to be determined. At least two measurements, i.e. two or more, are used that are not connected or not overlapping in some way. In order to have two measurements, a measurement can be stopped at a certain moment, and restarted, i.e. a new measurement initiated at a different moment, for example on another day. However, it is not per se necessary to have two separated or distinct dataset. One part of a dataset could indeed be used as a reference and the other part as a signal to position angularly regarding this reference. More generally, the two datasets may be differently or discontinuously acquired. In other words, every dataset collected on a machine can be angularly positioned according to a unique reference.

During a second step (ii) a characteristic signal signature for each of the measurement datasets is determined, i.e. for the first and second measurement datasets a characteristic signal signature being determined as a function of the rotation angle. More specifically, for each of the measurement datasets, the first and second measurement datasets are converted into a characteristic signal signature as a function of the rotation angle. According to an embodiment the characteristic signal signature is caused by irregularities of the shaft, more in particular irregularities in the surface of the shaft. The irregularities may be very small and even not geometric (e.g. due to variation of material composition).

According to an embodiment, the first measurement dataset related to the reference position or the second measurement dataset related to the angular position, being unknown, or both first and second measurement datasets are extending over more than one rotation of the shaft. Possibly, there is a different amount of rotations per measurement dataset. Second step (ii) may then comprise averaging over the more than one rotation. Further, from the measurements, the shaft rotation speed (which can be constant or variable) related to one of the measurement datasets, or in relation to both is determined or estimated. The second step (ii) may then comprise of re-sampling the measurement datasets in accordance with its corresponding shaft rotation speed. According to an embodiment the method further comprises inputting of the shaft rotation speed used for fine-tuning of the corresponding measurement dataset. The second step (ii) may then comprise re-sampling the measurement datasets in accordance with its corresponding shaft rotation speed. The second step (ii) may also comprise the filtering in the angular domain using a combination of filters, e.g. high-pass and bandpass filters. After having applied the second step (ii), we may refer to the signal signature being obtained. Prior to executing second step (ii) a frequency domain filtering, e.g. band-block, may be applied to the measurement datasets. This filtering can for instance be based on FFT, or IFFT.

In a third step (iii) the estimate of the angular position is determined by comparing the determined characteristic signal signatures of respective first and second measurement datasets. According to an embodiment, the third step (iii) is based on maximizing the cross correlation between the determined characteristic signal signatures, more in particular the estimate is provided by the angle shift required to obtain the maximum cross correlation. Prior to executing third step (iii), hence e.g. being part of second step (ii), an angular domain filtering, e.g. combined band-block and low-pass or high-pass, may be applied to the determined characteristic signal signature. This filtering is preferably after the frequency domain filtering as mentioned above (to be performed prior to second step (ii)). According to an embodiment, an engine is connected to the shaft, and preferably information about the engine connected to the shaft, such as for example the gearbox teeth ratio, is inputted. The angular domain filtering, in particular the band-block ones, may be derived from the information (about the engine connected to the shaft) being inputted. Prior to the third step (iii) each of the determined characteristic signal signatures can be rescaled (preferably normalized to 1) to facilitate computing a measure of the quality of the estimate of the angular position of the shaft. According to an embodiment, the determining of the estimate essentially only uses the measurements, being obtained while the shaft being rotated.

The invented method for determining an estimate of the angular position of a shaft relative to a reference position of that shaft, can be used in all kind of evaluation methods, where previously a so-called phase reference signal was required, known in the field (as keyphasor) for evaluating the shaft, or a motor with a gear box of which such shaft is part.

In a second aspect of the invention a method is provided for evaluating the angular position estimability, i.e. the method provides how to evaluate the quality of the estimation of the angular position. In other words, it may give an indication of to what respect the estimation of the angular position is reliable or not. The method comprising of three steps. A first step (i) concerns loading of at least two measurement datasets for evaluation purposes, these measurement datasets being for example temporal datasets. In a second step (ii) an estimate is determined of the angular position of the shaft relative to a reference position of the shaft, while rotating, for each of the measurement datasets, wherein one of those measurement datasets can serve as reference. A third step (iii) regards, when computing the shaft performance, the determined angular position estimation is exploited. According to an embodiment, a plurality of estimates of the angular position of the shaft is determined, and the shaft performance is computed based on one or more of this plurality of determined angular position estimations.

In a third aspect of the invention is provided a measurement set-up to be applied to a shaft, while rotating, for determining an estimate of the angular position of the shaft, relative to a reference position of the shaft. This determination of the estimate is based on the use of measurements, being obtained while the shaft being rotated. The measurement set-up comprises a sensor, capable, when provided in the vicinity of the shaft, for carrying out measurements, when the shaft being rotated. The measurement set-up also comprises a computer environment, adapted for executing any of the methods in accordance with the first or second aspect. The measurement set-up may comprise an engine, comprising at least one shaft, being rotated. The measurement set-up may further comprise a motor with a gear box.

**Brief description of the drawings**

Figure 1 (a) illustrates a flowchart embodiment of the method for determining an estimate of the angular position of a shaft in accordance with the invention. Figure 1 (b) illustrates a further flowchart embodiment, with a little more detail, of the method for determining an estimate of the angular position of a shaft in accordance with the invention.

Figure 2 (a) and Figure 2 (b) both illustrate a further version of the flowchart embodiment of Figure 1 (b) regarding the method for determining an estimate of the angular position of a shaft in accordance with the invention, wherein the rotation speed of the shaft being either determined or else inputted, can be used for determining the estimate.

Figure 3 (a) and Figure 3 (b) both illustrate another further version of the flowchart embodiment of Figure 1 (b) regarding the method for determining an estimate of the angular position of a shaft in accordance with the invention, wherein either frequency domain filtering or else angular domain filtering is applied.

Figure 4 illustrates a graphical representation embodiment of the measurement datasets out which the characteristic signal signatures can be determined, for determining an estimate of the angular position of a shaft, in accordance with the invention.

Figure 5 (a) illustrates yet another further version of the flowchart embodiment of Figure 1 (b) regarding the method for determining an estimate of the angular position of a shaft in accordance with the invention, wherein both frequency domain filtering and angular domain filtering are applied.

Figure 5 (b) illustrates a further version of the flowchart embodiment of Figure 1 (a) regarding the method for determining an estimate of the angular position of a shaft in accordance with the invention, wherein possible additional input and output are indicated.

Figure 6 (a) illustrates an embodiment of a measurement set-up, for determining and using the angular position of a shaft, in accordance with the invention.

Figure 6 (b) illustrates an embodiment of a shaft cross section, for which the angular position being determined, in accordance with the invention.

Figure 7 illustrates another flowchart embodiment of the method for determining an estimate of the angular position of a shaft in accordance with the invention.

**Brief description of the invention**

It is an object of the invention to enabling comparing different experiments on rotating objects, such as rotating shafts, by providing an estimate of angular position relative to a reference, in the absence of hardware marks enabling such comparing in the art, and in particular by exploiting e.g. contactless measurements on such rotating shafts.

It is an aspect of the invention to demonstrate that the irregularities of said shaft, more in particular irregularities in the surface of said shaft provide in such measurements, although tiny, a characteristic signal that can be reasonably used for determining the estimate, if and when appropriate data processing, based on key insights of the underlying processes are occurring during measurements.

In essence, the conversion from the time domain of the initially obtained temporal dataset to the so-called angular domain, by use of speed information, either obtained directly or indirectly, is provided.

It is worth emphasizing that determining a characteristic signal signature within said measurements as a function of the rotation angle comprises re-sampling the measurement (temporal) datasets in accordance with its corresponding shaft rotation speed to convert the measurements with constant timestep (two measurements are always spaced by the same time) to a constant angle step (two measurements are always spaced by the same delta angle) by performing interpolation to recompute some data.

Moreover, in a preferred embodiment filtering is provided, in particular use of frequency domain filtering but also angular domain filtering, this latter being based on insights on the engine (connected to the shaft) behavior, or more generally on the equipment kinematically related to the shaft (e.g. another shaft through the gearbox), and preferably both are used in the right order.

The invention further provides a preferred embodiment wherein the measurement (temporal) datasets are obtained over more than one rotation of the shaft (though not necessarily complete rotations, and possibly with a different amount of rotations per dataset) which has the additional benefit to reduce the noise when averaging over the amount of data windows captured.

Finally, it is worth mentioning that the method can be used for determining a plurality of estimates of the angular position of a shaft, while rotating, relative to a (being determined during the method in accordance with first aspect of the invention) reference position of that shaft.

**Detailed description of the invention**

Taking into account the fact that notches or hardware marks are not present on the rotating object or machinery to be monitored, the basic idea leading to the invention is to use the so-called runout information of one of the vibration signals to construct a virtual phase reference signal and use it to calculate the phase angles of all vibration signals. The runout is the measured gap or signal resulting from shaft irregularities excluding effect due to the dynamic motion. The solution provided with the present invention may reduce the instrumentation costs for vibration monitoring, and potentially makes the implementation of a measurement campaign easier and cheaper. Moreover, it may create new market possibilities for installations where it was up-to-now not possible or not economical to install a phase reference, e.g. for large pumps in the industry, motors, fans. The invention generates great benefit because of the possibility to build a reference angle, needed for some type of vibration monitoring, without installing a phase reference.

Hence, the invention enables to reconstruct the angular position directly from the monitored signal, i.e. extracting the so-called runout information, being a measure for the shaft cylindrical surface deviations as compared to a perfectly homogeneous round surface, concentric with the bearing centers. Such deviations include surface out-of-roundness, mechanical defects on the surface (surface finish or scratches), lack of concentricity between the surface and the journal bearing centers, or material inhomogeneity.

The invention thus makes use of the underlying aspect that the shaft is not perfect, neither from a mechanical point of view, i.e. the shaft not being perfectly rounded, nor from an electrical point of view, in that small localized differences in magnetic properties may occur within the shaft material. All these imperfections lead to a periodic signal of one complete turn of the shaft. Having retrieved this periodic signature from e.g. common vibration measurements, one can derive the shaft angle. The difficulty is although that the imperfections can be very small with respect to the signal resulting from the shaft vibration. In addition, the runout can be influenced by the operating condition. For example, a shaft temperature increase (caused during operation) may lead to a dilatation of the shaft.

According to an embodiment, the shaft angle can be derived based on an algorithm performing signal processing operations on the displacement signal returned by the vibration measurement sensor, e.g. eddy current sensor. The input and output of the algorithm can be defined as follows. While the input being determined as the output of the eddy current sensor, usually measuring just the gap between the shaft and the eddy current sensor i.e. a displacement/voltage in function of time, the output can be defined as the absolute rotation angle of the shaft in function of time. By absolute is meant, with respect to a well-defined angular though unknown (but being determined during the method in accordance with first aspect of the invention) reference position on the shaft. This shaft angle will always be computed with respect to a constant position on the shaft. In other words, it will not change after having restarted the machine another day or in case the algorithm is stopped, interrupted or restarted. The signal processing algorithm itself is a combination of multiples filters and operations such as e.g. low pass, comb filter, cyclic mean and domain transformation (herewith highlighting the switch from time to angular domain).

According to an embodiment of the invention, the signal processing algorithm is conceptually based on the following considerations:

- There exists a runout signature S which has a period of one turn ($2\pi = 360°$) when expressed in the angular domain

$$S(a) = S(a + k\,2\,\pi)$$

$$\forall\,k \in N$$

 where a is the shaft rotation angle.
- The runout signature is independent from the operating conditions. Therefore the same signature can be found at e.g. different speed, or different days. It is noted that this is related to this particular embodiment for the algorithm. Whenever extending to applications with bigger units representing thermal expansion or axial movement, this will have to be adapted.
- The runout signature (in the angular domain) can be computed from the original signal (in the time domain).
- Errors in estimating this signature are sufficiently limited to allow estimation of the shaft angle.
- In practice, the runout signature S will be only estimated. Assuming that on two different time periods two runout signatures S' and S" are estimated. The relation between those two runout signatures can be determined as

*S'(a) ≅S''(a + da)* depending on the angular shift *da* between the respective rotation angles.

The main steps of the algorithm developed accordingly are presented here below.

In accordance with an embodiment, starting from a given temporal signal, the following five steps are performed.

1. Time filtering

The signal is filtered through a band block filter or a comb filter around 50 Hz and its multiples or harmonics. The reason behind this filtering is that it seems that there was some (noise) signal at that 50 Hz frequency. It can be observed by looking at the spectrogram during a period where the unit had variable speed. The origin of this component is not clear but could be due to electromagnetic interference with the monitoring system.

While referring to this particular embodiment, it is noted that the 50 Hz filtering being applied for a very specific reason, possibly not needed according to another embodiment, or maybe another kind of time filtering being required according to a further embodiment. In general (according to overall embodiment), the signal is filtered through multiple band block filter and/or a comb filters. The objectives of these filters are to remove noises associated to angular independent sources. These frequencies can be identified by looking at the spectrogram during a period where the unit had variable speed. A generic term to refer to in this respect could be signal whitening of time-dependent phenomena. Time-dependent phenomena are cyclo-stationary phenomena wherein cycle lengths being steady, i.e. do not depend on the speed of the machine.

2. Angular resampling or domain transformation

The signal is converted from time constant interval to angular constant interval, or from time domain to angular domain. This resampling needs an estimation of the shaft instantaneous speed, this estimation being based on the tracking of the signal instantaneous frequency. To perform the resampling, the angular interval size is chosen sufficiently small to keep all information i. e. respecting Shannon criterion.

3. The signal is filtered in the angular domain

Applying a band block at the orders corresponding to the order of the fast shaft (i.e. for example in the order of the gearbox teeth ratio) and all its multiples or harmonics.

Applying a low- or high-pass filter removing all orders lower or higher than a certain value.

4. Rotation domain averaging or cyclic mean

A cyclic mean is computed on the signal to reduce the noise.

$$S(a) = \sum_k s(a + 2\pi k)$$

$$\forall\, a \in [0, 2\pi]$$

When this algorithm is applied on two signals starting at two different times t1, t2 one can obtain two runout signature estimation S' and S''. If the real difference between angular positions at t1 and t2 is *da* it is expected to have *S'(a) ≅ S''((a + da) mod 2 π)*.

The final step for validating the feasibility of the approach is therefore to automatically identify *da'* from S' and S'' allowing to resynchronize the two signatures. In particular, the angular shift *da'* should be close to *da* (known using e.g. the phase reference information).

5. The identification of *da'* from S' and S''

This can be done by searching for the value which maximizes the cross-correlation between the two signals.

**Detailed description of the drawings**

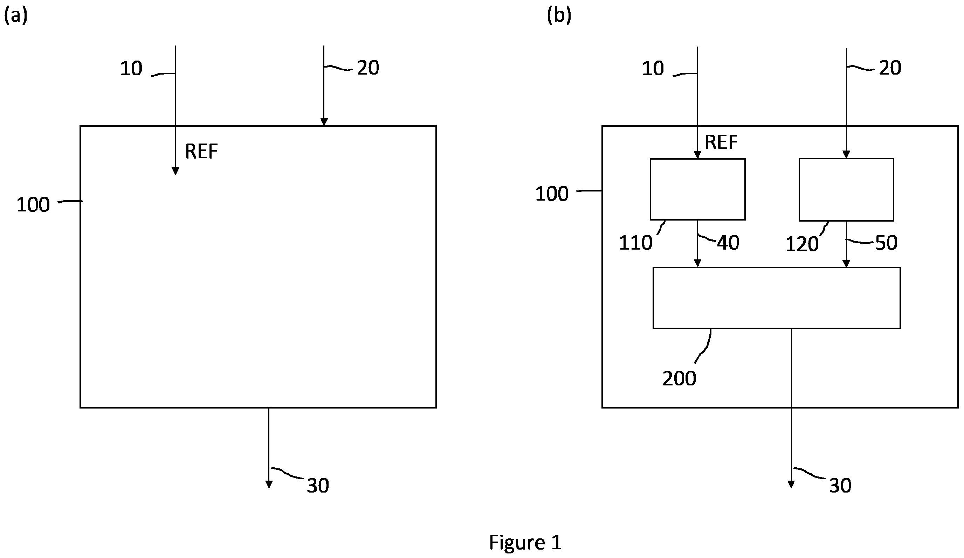

Figure 1 (a) shows a flowchart of a method for determining an estimate 30 of the angular position of a shaft, while rotating, relative to a reference position (to be appointed during the method based on initial measurement) of the shaft, by using of measurements obtained while rotating said shaft.

The method comprises of loading of at least two measurement datasets 10, 20, wherein these measurement datasets being for example temporal datasets. One measurement dataset 10 is obtained by starting the rotation of said shaft at a first position, becoming the reference position and another measurement dataset 20 is obtained by starting at a second position, becoming the angular position, being unknown and to be determined. The method further comprises of determining the estimate 30 of the angular position with respect to the reference position.

Figure 1 (b) shows a further flowchart of the method for determining an estimate 30 of the angular position of a rotating shaft relative to a reference position of the shaft, by using of measurements obtained while rotating said shaft. Here, the method again comprises of loading of at least two measurement datasets 10, 20, wherein these measurement datasets being for example temporal datasets, and wherein one measurement dataset 10 is obtained by starting the rotation at the reference position while another measurement dataset 20 is obtained by starting at the angular position, being unknown and to be determined. The method now also comprises of determining 110, 120 a characteristic signal signature 40, 50 for each of the measurement datasets, and this within the measurements as a function of the rotation angle. The method further comprises of determining the estimate 30 of the angular position by comparing the determined characteristic signal signatures 40, 50. It is noted that the signature 40 of the reference position will be saved, once it has been determined. Therefore, according to an embodiment (not shown), related to practice during "normal" operations, meaning a sort of initialized state wherein the reference signature has yet been determined, both the at least two measurement datasets 10, 20 no longer have to be the starting point, but it suffices to use signal signature 40 and data measurement 20 as input. Hence, the operational version of the tool, in accordance with an embodiment of the invention, will have as input signal signature 40 and data measurement 20.

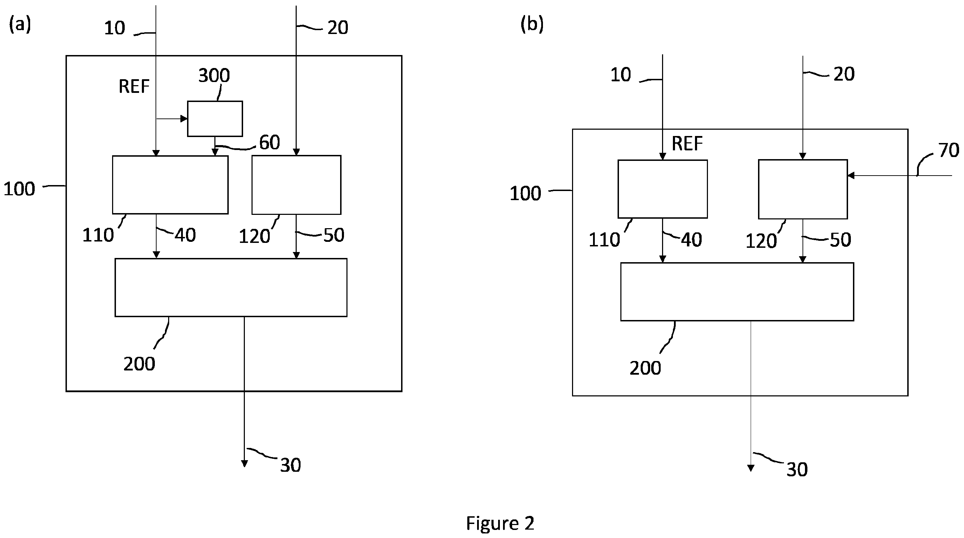

Figure 2 (a) shows that from one of the measurement datasets 10 also the rotation speed 60 is determined in step 300. Here this is illustrated on the reference set (REF) but this can also be used on the other set or on both. Figure 2 (b) illustrates an alternative embodiment where the rotation speed 70 is just inputted. The embodiments of these figures can be combined.

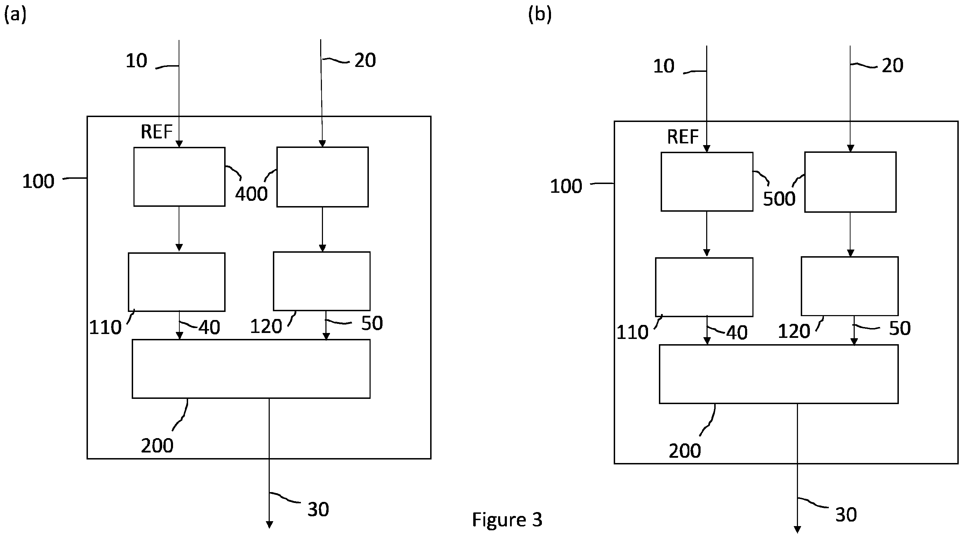

Figure 3 (a) shows a preferred embodiment wherein frequency domain filtering 400 is applied, while Figure 3 (b) shows a preferred embodiment wherein angular domain filtering 500 is applied.

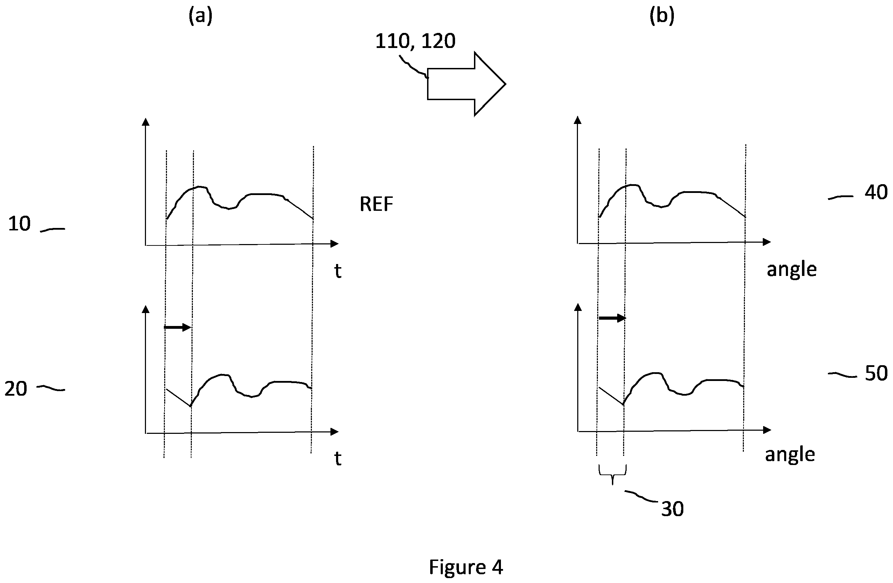

Figure 4 shows an embodiment with the underlying principles of the invention, in that the measurement shows (unexpectedly) a characteristic signal (here idealized), good enough to determine the estimates, in particular that the rotation angle sought for relates to a shift in time of this signature, which when properly translated into angular coordinates translates into an angular position. It is the contribution of the invention to demonstrate that also on realistic noisy signals still relevant estimates can be determined.

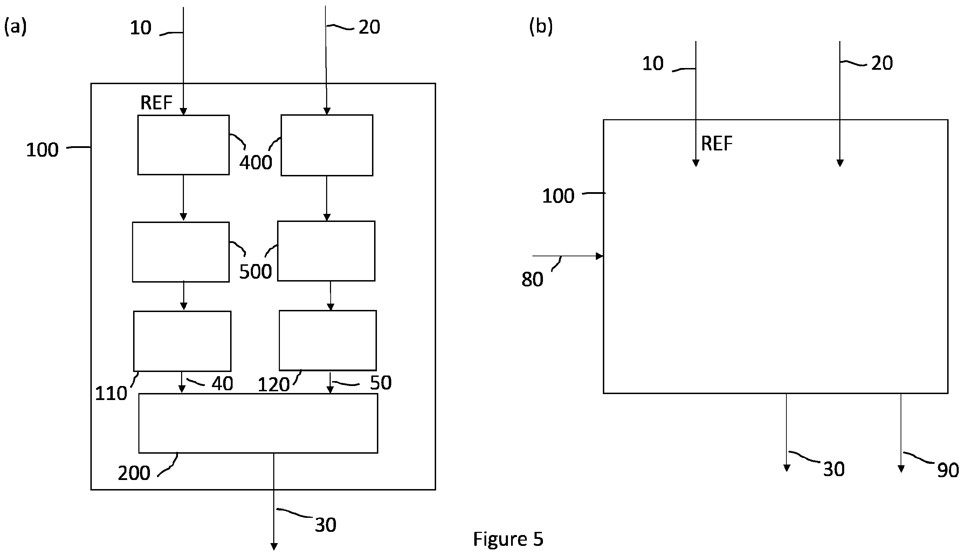

Figure 5 (a) shows a more preferred embodiment wherein both frequency domain filtering 400 and angular domain filtering 500 are applied. Figure 5 (b) is based on Figure 1(a) and further shows that additional inputs such as related to engine (or equipment kinematically related to the shaft) information 80 can be supplied. Further additional output 90 related to the quality of the estimates is also shown.

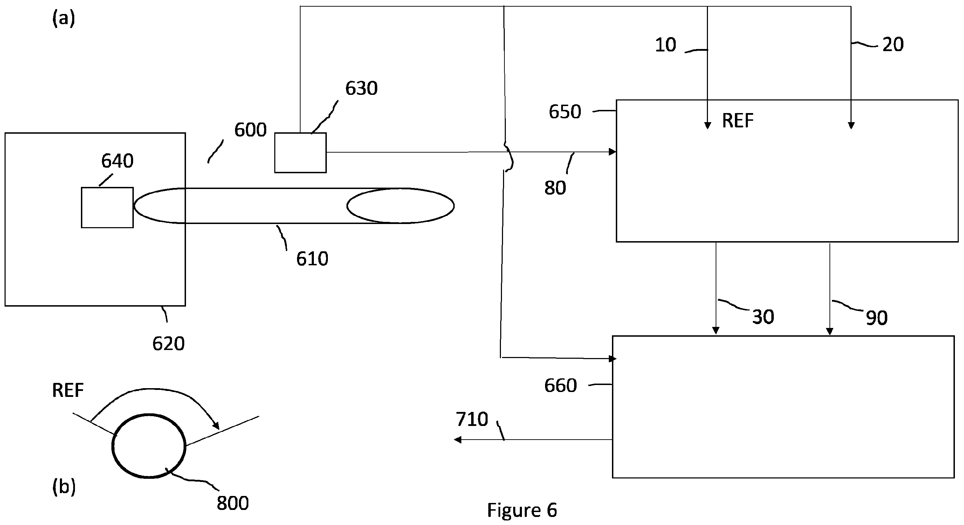

The embodiment of Figure 6 (a) shows the arrangement of a motor 620, a shaft 610, and a gearbox 640, all together defining an engine 600, and the related sensor 630, who's signals are used by computer systems 650, 660. A first computer system 650 is used to determine the angular position estimation 30 of the shaft 610. A second computer system 660 is used to determine the engine performance 710 using the angular position estimations 30 in such performance computation, e.g. in particular being related to vibration behaviour. Figure 6 (b) shows a front view of a cross section 800 of the shaft 610 and how the angular position estimation will be determined related to the reference (REF), as indicated by the arrow.

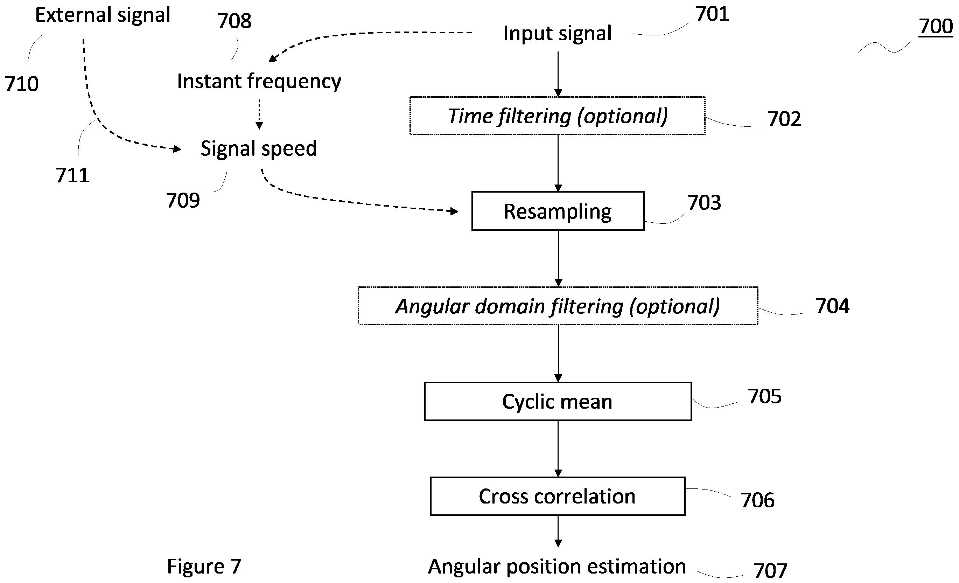

With Figure 7, another flowchart embodiment being illustrated of the method 700 for determining an estimate of the angular position 707 of a shaft in accordance with the invention. While using the input signal 701 as a starting point, the determination is characterized by the processes of resampling 703, rotation domain averaging or cyclic mean 705 (both can be used as synonyms here) and cross correlation 706. Optionally, during this determination, time filtering 702 and angular domain filtering 704 may also be appropriate to be applied as indicated in the dotted boxes. Based on the input signal 701, the instant frequency 708 may be determined, out which in turn the signal speed 709 can be derived. The signal speed 709 does not necessarily have to come from the input signal 701, but may also be acquainted or inputted 711 from somewhere else, here indicated by an external signal 710.

## Claims

1. A method (700) for determining an estimate (30, 707) of the angular position of a shaft (610) relative to a reference position of said shaft, by using of measurements, the method comprising the steps of: (i) loading at least two measurement datasets, a first measurement dataset (10) obtained by starting rotating said shaft at a first position, becoming said reference position and a second measurement dataset (20) obtained by starting at a second position, becoming said angular position; (ii) for each of said measurement datasets, converting said first and second measurement datasets (10, 20) into a characteristic signal signature (40, 50) as a function of the rotation angle; and (iii) determining (200) said estimate (30, 707) of said angular position by comparing said determined characteristic signal signatures (40, 50).

2. The method (700) of claim 1, wherein said measurements are part of vibration measurements and preferably said estimate is used to calculate the phase angles of one or more of the vibration signals within those vibration measurements.

3. The method (700) of claim 1 or 2, wherein said characteristic signal signature (40, 50) is caused by irregularities of said shaft, more in particular irregularities in or at the surface of said shaft.

4. The method (700) of claim 1 to 3, wherein said measurements are provided by sensors (630), preferably eddy current sensors.

5. The method (700) of claim 1 to 4, wherein said step (iii) is based on maximizing a cross correlation amongst said determined characteristic signal signatures (40, 50), more in particular said estimate (30, 707) is provided by the angle shift required to obtain said maximum cross correlation (706).

6. The method (700) of claim 1 to 5, wherein said first measurement dataset related to said reference position or said second measurement dataset related to said angular position or both said first and second measurement datasets are extending over more than one rotation of said shaft; and wherein said step (ii) comprises averaging (705) over said more than one rotations.

7. The method (700) of claim 1 to 6, wherein from said measurements also the shaft rotation speed (60, 709) related to one of said measurement datasets (10, 20) or for both is determined or estimated (300) and wherein said step (ii) comprises re-sampling (703) of said measurement datasets in accordance with its corresponding shaft rotation speed.

8. The method (700) of claim 1 to 6, further comprising the step of inputting (711) the shaft rotation speed (70, 709) and wherein said step (ii) comprises re-sampling (703) said measurement datasets in accordance with its corresponding shaft rotation speed.

9. The method (700) of claim 1 to 8, wherein prior to executing step (ii) a frequency domain filtering (400) is applied to said measurement datasets.

10. The method (700) of claim 1 to 9, wherein prior to executing step (iii) an angular domain filtering (500) is applied to said determined characteristic signal signature (40, 50), preferably information (80) about an engine connected to said shaft is inputted and said angular domain filtering (500) is derived from said information (80).

11. The method (700) of any of the previous claims, wherein prior to executing step (iii) each of said determined characteristic signal signatures (40, 50) are rescaled to facilitate computing a measure of the quality (90) for said estimate (30, 707) of the angular position of said shaft.

12. The method (700) of any of the previous claims, wherein said determining of said estimate (30, 707) essentially only uses said measurements.

13. A measurement set-up to be applied to a shaft for determining an estimate (30, 707) of the angular position of said shaft relative to a reference position of said shaft by using of measurements, the measurement set-up comprising: (I) a sensor (630), capable, when provided in the vicinity of said shaft, for carrying out measurements; and (II) a computer environment (650, 660), adapted for executing any of the methods of the claims 1 to 12.

14. The measurement set-up of claim 13 further comprising an engine (600), comprising at least one shaft (610), and possibly said measurement set-up further comprising a motor (620) with a gear box (640).

(a)

10 ⎺⎺| ⎺⎺⎺ 20

100 ⎺|

REF

30

(b)

10 ⎺⎺| ⎺⎺⎺ 20

100 ⎺|

REF

110 — 40    120 — 50

200

30

Figure 1

Figure 2

EP 4 012 527 A1

(a)

(b)

Figure 3

Figure 4

EP 4 012 527 A1

(a)

10 ⌐       ⌐ 20

100 ⌐

REF

400

500

110  ⌐ 40    120 ⌐ ⌐ 50

200

30

(b)

10 ⌐       ⌐ 20

REF

100 ⌐

80 →

30    90

Figure 5

EP 4 012 527 A1

13

Figure 6

External signal  708 - - - - - - - - →  Input signal  701
710

Instant frequency

711

709  Signal speed - - - - - - - →  Resampling  703

Time filtering (optional)  702

Angular domain filtering (optional)  704

Cyclic mean  705

Cross correlation  706

Angular position estimation  707

Figure 7

700

<center>

Europäisches
Patentamt

European
Patent Office

Office européen
des brevets

**EUROPEAN SEARCH REPORT**

</center>

**Application Number**

EP 21 21 3662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | JP 2020 159820 A (MITSUBISHI HITACHI POWER SYS) 1 October 2020 (2020-10-01)<br>* paragraph [0001] *<br>* paragraph [0011] – paragraph [0015] *<br>* paragraph [0023] – paragraph [0026] *<br>* paragraph [0055] – paragraph [0057] *<br>* paragraph [0069] *<br>* paragraph [0072] *<br>* paragraph [0075] – paragraph [0080] *<br>* paragraph [0084] *<br>* paragraph [0038] – paragraph [0049] *<br>* paragraph [0061] – paragraph [0065] *<br>* figures 1-10 * | 1-4,<br>12-14<br><br>5-11 | INV.<br>G05B23/02 |
| Y | US 2020/328702 A1 (HOOVER DAVID [CH])<br>15 October 2020 (2020-10-15)<br>* paragraph [0002] *<br>* paragraph [0009] *<br>* paragraph [0010] – paragraph [0020] *<br>* paragraph [0024] *<br>* paragraph [0033] *<br>* paragraph [0069] *<br>* paragraph [0078] * | 5,6 | |
| Y | US 2015/345325 A1 (KHIBNIK ALEXANDER I [US]) 3 December 2015 (2015-12-03)<br>* paragraph [0003] *<br>* paragraph [0008] *<br>* paragraph [0017] – paragraph [0018] *<br>* paragraph [0047] *<br>* paragraph [0051] *<br>* paragraph [0060] – paragraph [0067] *<br>-----<br>-/-- | 5,6,9,11 | TECHNICAL FIELDS SEARCHED (IPC)<br>G04C<br>F01D<br>G01H<br>E21B<br>G05B |

The present search report has been drawn up for all claims

| Place of search | Date of completion of the search | Examiner |
|---|---|---|
| Munich | 7 February 2022 | Hristov, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 21 21 3662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 405 047 A1 (SHELL INT RESEARCH [NL]) 7 April 2004 (2004-04-07)<br>* paragraph [0001] *<br>* paragraph [0014] *<br>* paragraph [0020] *<br>* paragraph [0023] *<br>* paragraph [0033] *<br>* paragraph [0055] *<br>* paragraph [0070] – paragraph [0071] *<br>* paragraph [0075] *<br>----- | 6-10 | |
| A | CA 2 806 516 A1 (ATHENA IND TECHNOLOGIES INC [CA]) 29 January 2009 (2009-01-29)<br>* the whole document *<br>----- | 1-14 | |

TECHNICAL FIELDS
SEARCHED      (IPC)

The present search report has been drawn up for all claims

| Place of search | Date of completion of the search | Examiner |
|---|---|---|
| Munich | 7 February 2022 | Hristov, Stefan |

EPO FORM 1503 03.82 (P04C01)

page 2 of 2

## ANNEX TO THE EUROPEAN SEARCH REPORT
## ON EUROPEAN PATENT APPLICATION NO.

EP 21 21 3662

This annex lists the patent family members relating to the patent documents cited in  the above-mentioned European search report.
The members are as contained in the European Patent Office EDP file on
The European Patent Office is in no way liable for these particulars which are merely given for the purpose of information.

07-02-2022

| Patent document cited in search report | | Publication date | Patent family member(s) | | Publication date |
|---|---|---|---|---|---|
| JP 2020159820 | A | 01-10-2020 | NONE | | |
| US 2020328702 | A1 | 15-10-2020 | CN | 111835241 A | 27-10-2020 |
| | | | EP | 3722891 A1 | 14-10-2020 |
| | | | JP | 6982119 B2 | 17-12-2021 |
| | | | JP | 2020173248 A | 22-10-2020 |
| | | | US | 2020328702 A1 | 15-10-2020 |
| US 2015345325 | A1 | 03-12-2015 | EP | 2949879 A1 | 02-12-2015 |
| | | | US | 2015345325 A1 | 03-12-2015 |
| EP 1405047 | A1 | 07-04-2004 | AT | 354078 T | 15-03-2007 |
| | | | BR | 0210966 A | 08-06-2004 |
| | | | CA | 2453092 A1 | 23-01-2003 |
| | | | DE | 60218169 T2 | 31-10-2007 |
| | | | EP | 1405047 A1 | 07-04-2004 |
| | | | ES | 2282441 T3 | 16-10-2007 |
| | | | JP | 2005504269 A | 10-02-2005 |
| | | | KR | 20040015339 A | 18-02-2004 |
| | | | MY | 129261 A | 30-03-2007 |
| | | | NZ | 530428 A | 24-06-2005 |
| | | | TW | 579424 B | 11-03-2004 |
| | | | US | 2004199348 A1 | 07-10-2004 |
| | | | WO | 03006935 A1 | 23-01-2003 |
| | | | ZA | 200400167 B | 26-01-2005 |
| CA 2806516 | A1 | 29-01-2009 | NONE | | |

EPO FORM P0459

For more details about this annex : see Official Journal of the European Patent Office, No. 12/82

**EP 4 012 527 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020159820 A
- US 20200328702 A
- US 98840935 B2
- EP 1405047 A1